**Europäisches Patentamt**

**European Patent Office**

**Office européen des brevets**

(11) Veröffentlichungsnummer: **0 154 803**
**A2**

# (12) EUROPÄISCHE PATENTANMELDUNG

(21) Anmeldenummer: 85101164.3

(22) Anmeldetag: 05.02.85

(51) Int. Cl.⁴: **G 03 B 42/04**

(30) Priorität: 15.02.84 DE 3405423

(43) Veröffentlichungstag der Anmeldung: 18.09.85
Patentblatt 85/38

(84) Benannte Vertragsstaaten: **FR GB IT**

(71) Anmelder: **AGFA-GEVAERT Aktiengesellschaft,
D-5090 Leverkusen 1 (DE)**

(72) Erfinder: **Müller, Jürgen, Dipl.-Ing., Bozzarisstrasse 7,
D-8000 München 90 (DE)**

(54) Blattfilmmagazin und lichtdichte Entnahmevorrichtung für die Blattfilme aus dem Magazin.

(57) Ein lichtdichtes Blattfilmmagazin, vorzugsweise für Röntgenfilm, das zur Aufnahme eines in einer lichtdichten, aufreißbaren Umhüllung mit Aufreißlasche befindlichen Blattfilmstapels dient, und eine Entnahmevorrichtung zum Entnehmen einzelner Blattfilme aus dem Magazin mit einem mit einer lichtdichten Kammer versehenen Fach für das Magazin, wobei in der Kammer das Magazin geöffnet ist, sind so ausgebildet, daß das Magazin (2) aus einer oben zumindest teilweise offenen Box (7) für den in der Umhüllung (8) befindlichen Filmstapel (5) und einem entgegen der Einschubrichtung des Magazins (2) in das Fach (1) von einer geschlossenen in eine geöffnete Stellung schiebbaren Deckel (6) besteht, daß an der Box (7) ein über den Deckel (6) in dessen geöffneter Stellung vorstehender Griffteil (7c) angebracht ist und daß am Deckel (6) gegenüber der Box (7) quer zur Einschubrichtung vorstehende Deckelteile (bei 6a) angeordnet sind, in deren Bewegungsweg in Einschubrichtung vor der lichtdichten Kammer (1b) Wandteile (1c) des Faches (1) liegen. Dadurch wird eine vollständig bei Tageslicht ladbare Filmvorratseinheit für Kassettenladevorrichtungen geschaffen.

0154803

AGFA-GEVAERT
Aktiengesellschaft                    D-5090 Leverkusen 1

Patentabteilung


                                      eh-se




Blattfilmmagazin und lichtdichte Entnahmevorrichtung
für die Blattfilme aus dem Magazin
_____


Die Erfindung betrifft ein lichtdichtes Blattfilmmagazin, vorzugsweise für Röntgenfilm, das zur Aufnahme eines in einer lichtdichten, aufreißbaren Umhüllung mit Aufreißlasche befindlichen Blattfilmstapels dient, und eine Entnahmevorrichtung zum Entnehmen einzelner Blattfilme aus dem Magazin mit einem mit einer lichtdichten Kammer versehenen Fach für das Magazin, wobei in der Kammer das Magazin geöffnet ist.

Bei im Handel befindlichen Kassettenbe- und -entlademaschinen muß das Vorratsmagazin in der Dunkelkammer nach Aufreißen der Umhüllung des Blattfilmstapels gefüllt und lichtdicht verschlossen werden. Beim Einschieben




A-G 1933

des Magazins in die Filmentnahmestation einer Belademaschine werden dann in einer lichtdichten Kammer derselben der Magazinverschluß entriegelt und der Magazindeckel geöffnet, so daß mit Saugern die einzelnen Filmblätter dem geöffneten Magazin entnommen und aus der Kammer weitertransportiert werden können, z. B. in eine an anderer Stelle des Gerätes bereitstehende leere Kassette. Der Nachteil dieser bei Kassettenbe- und -entlademaschinen bekannten Entnahmevorrichtungen für einzelne Filme von einem Blattfilmstapel besteht darin, daß die Vorratsmagazine nicht bei Tageslicht geladen werden können, sondern die Filmvorratspacks in einer Dunkelkammer in die Magazine eingelegt werden müssen. Nachdem bekannte Kassettenbe- und -entlademaschinen heute bereits so vervollkommnet sind, daß von ihnen automatisch der einer Kassette entnommene belichtete Film in eine Entwicklungsmaschine lichtdicht weitergeleitet wird und aus letzterer fertig entwickelt entnommen werden kann, so daß für die Kassettenent- und -beladung keine Dunkelkammer mehr erforderlich ist, ist die Notwendigkeit einer Dunkelkammer für die Bestückung der Filmvorratsmagazine ein schwerwiegender Nachteil geworden.

Nun sind beispielsweise durch die DE-OS 27 30 880 oder die DE-OS 25 13 673 oder die US-PS 25 26 840 Blattfilmpacks mit lichtdichten Aufreißhüllen mit Aufreißlaschen bekannt, die z. B. gemäß der DE-GMS 77 25 804 samt verschlossener Hülle in eine Kassette eingelegt werden. Die Aufreißlasche wird dabei in eine von außen betätigbare Lage gebracht. Danach wird das Magazin lichtdicht verschlossen und an der Lasche, ohne daß Licht in das

A-G 1933

- 3 -

Magazininnere dringen kann, die Aufreißhülle aufgerissen und vom Blattfilmstapel abgezogen. Auf diese Weise ist es möglich, Blattfilmmagazine bei Tageslicht zu laden.

Der Erfindung liegt nun die Aufgabe zugrunde, Blattfilmmagazine der letztgenannten Art besonders vorteilhaft auf eine eingangs genannte Entnahmevorrichtung abzustimmen, so daß nicht nur die Beladung der Vorratsmagazine ebenfalls bei Tageslicht erfolgen kann, sondern auch das Verbringen der Magazine in ihre Bereitschaftslage in einer Entnahmevorrichtung auf besonders einfache und bedienungsfreundliche Art möglich ist.

Diese Aufgabe wird erfindungsgemäß gelöst durch die Merkmale des Hauptanspruchs. Weitere vorteilhafte Merkmale der Erfindung sind den Unteransprüchen entnehmbar.

Die Erfindung wird anhand von Zeichnungen näher erläutert. Es zeigen

Fig. 1    einen Schnitt durch ein erfindungsgemäßes Blattfilmmagazin beim Beladen mit einem Filmpack,

Fig. 2    das geschlossene beladene Magazin nach Fig. 1 im noch verschlossenen Zustand des Filmpacks,

Fig. 3    einen Schnitt durch eine erfindungsgemäße Blattfilmentnahmevorrichtung mit eingesetztem Magazin nach Fig. 2 in der Betriebsstellung,

A-G 1933

Fig. 4 und

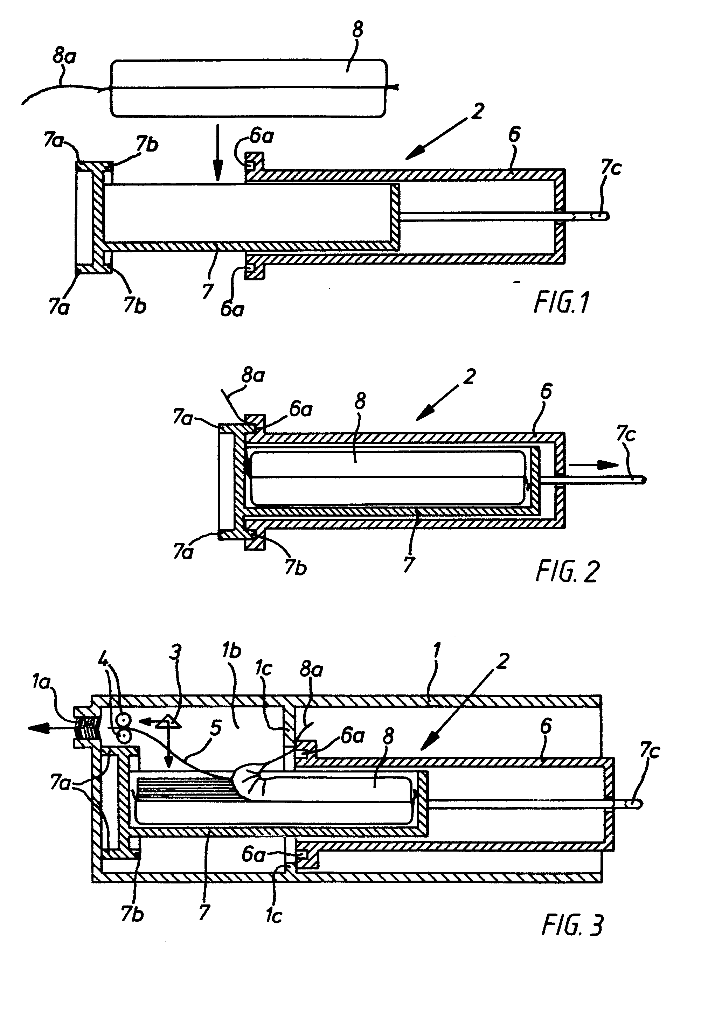

5 eine raumsparende Ausgestaltung eines erfindungsgemäßen Magazins nach Fig. 1 und 2,

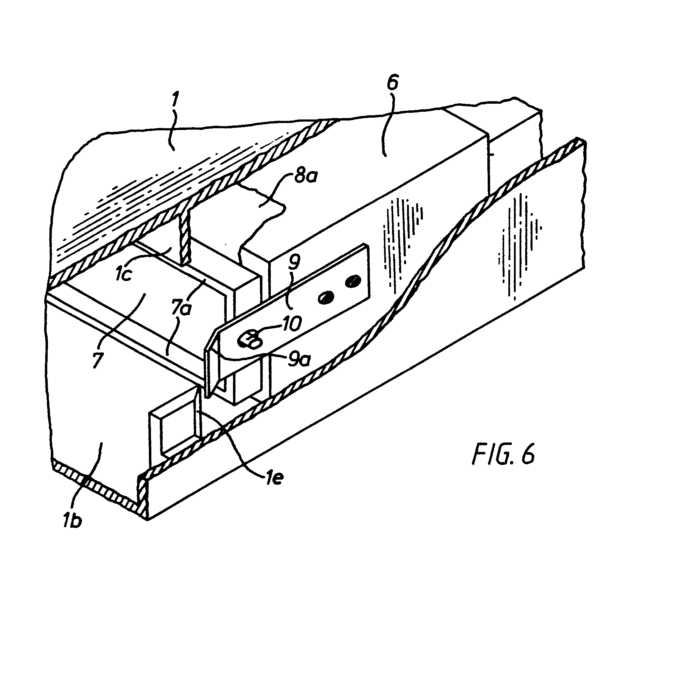

Fig. 6 eine aufgebrochene, perspektivische Darstellung eines Details der Figuren 1, 2 bzw. 4 und 5,

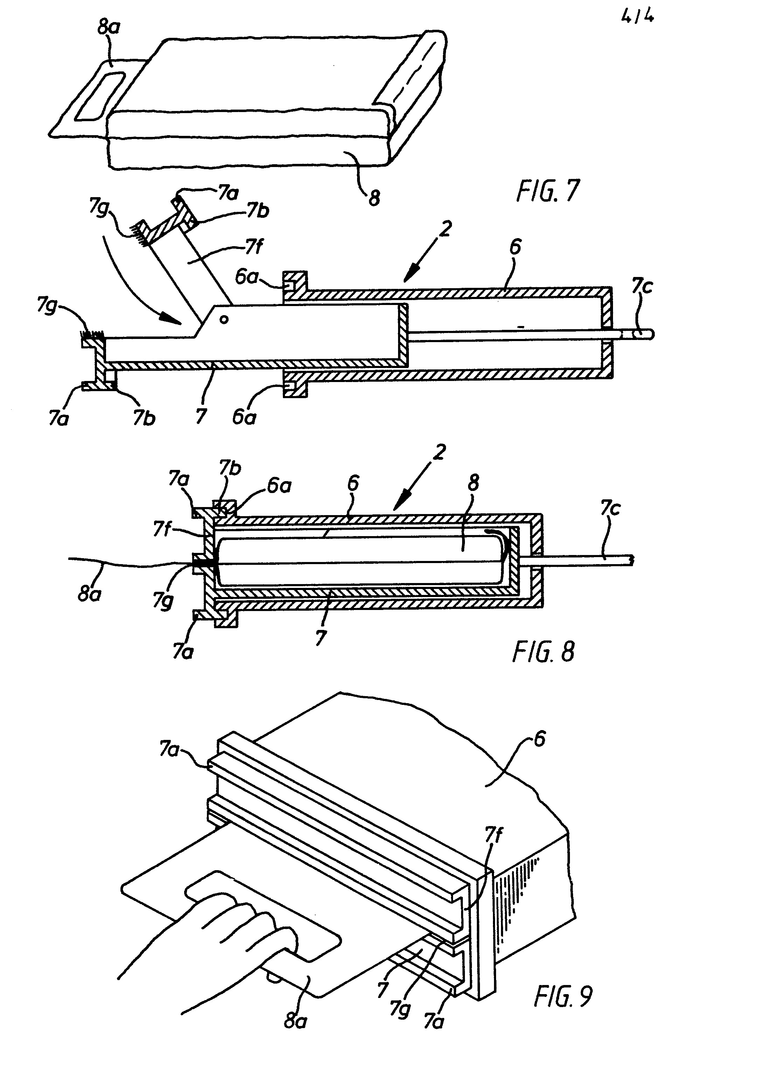

Fig. 7 eine andere erfindungsgemäße Magazinausgestaltung beim Beladen,

Fig. 8 das Magazin nach Fig. 7 im geladenen, geschlossenen Zustand,

Fig. 9 eine abgebrochene, perspektivische Darstellung des Magazins nach den Figuren 7 und 8 beim Aufreißen der Filmumhüllung.

In den Figuren 3 und 6 ist ein an der Einschubseite offenes Fach für ein Röntgenblattfilmvorratsmagazin 2 an irgend einer an sich bekannten Röntgenfilmkassetten-Be- und Entladevorrichtung schematisch dargestellt und mit 1 bezeichnet. Am der Einschubseite gegenüberliegenden, inneren Ende des Faches 1 sind oberhalb einer später zu beschreibenden Entnahmeöffnung des Magazins 2 eine Entnahmevorrichtung, vorzugsweise ein Sauger 3, ein Transportrollenpaar 4 für ein vom Sauger 3 abgehobenes oberstes Filmblatt 5 und ein lichtdicht ausgestatteter Ausführschlitz 1a für das Blatt 5 zu den übrigen, nicht dargestellten Geräteteilen vorgesehen. Der Teil 1b des Faches 1, in dem die Entnahmevorrichtung 3, 4 angeordnet und demnach das Magazin 2 geöffnet ist, ist durch eine Wand 1c von der offenen Einschubseite

A-G 1933

des Faches 1 abgeteilt, wobei bei eingesetztem Magazin 2 zwischen dessen Schiebedeckel 6 und der Wand 1c eine lichtdichte Anlage auf irgend eine bekannte Weise bewirkt wird. Diese Lichtabdichtung könnte z.B. durch nicht gezeigte, in der eingesetzten Stellung des Magazins 2 ineinandergreifende Labyrinthstege und -Nuten der Wand 1c und des Deckels 6 oder durch an den in Anlage befindlichen Flächen vorgesehene Plüschstreifen gebildet sein. Die Wand 1c reicht rundum in den Einschubweg des rohrförmigen Deckels 6 und weist innerhalb desselben eine Öffnung auf, durch die eine oben zumindest teilweise offene, in den rohrförmigen Deckel 6 ein- und ausschiebbare Box 7 für einen Filmpack 8 in den lichtdichten Raum 1b in die offene Magazinstellung hindurchschiebbar ist. In äquivalenter Weise wäre es natürlich auch möglich, den Schiebedeckel 6 nur über die Ober- und Längsschmalseite der Box 7 reichen zu lassen und dann die Wand 1c durch den frei liegenden Boxteilen zugewandte Lichtabdichtungsmittel in dem Bereich, in dem kein Deckel vorhanden ist, abzudichten.

Gemäß den Figuren 1 bis 3 weist die Box 7 stirnseitig einen Anlagerahmen 7a auf, dessen Stirnseite eine Ebene bildet, die im Gebrauchszustand des Magazins 2 an der inneren Stirnwand des Faches 1 zur Anlage kommt und die Gebrauchslage definiert, wie Fig. 3 entnehmbar ist. Die Box 7 ist oben ganz offen und weist einen nach hinten vorstehenden Griffteil 7c auf, der durch entsprechende rückwärtige Öffnungen des nur nach vorn offenen Schiebedeckels 6 ragt. Die Stirnseite der Box 7 weist außerdem einen nach innen (in Verlängerung des Rahmens 7a)

A-G 1933

ragenden, rippenartigen Rahmenteil 7b auf, und die offene Stirnseite des Deckels 6 weist einen breiten Rahmenteil mit einer zum rippenartigen Rahmenteil 7b komplementären umlaufenden Nut 6a auf.

Ein Blattfilmpack mit Blättern 5 ist in einer an sich bekannten lichtdichten Aufreißumhüllung 8 untergebracht, wobei die Umhüllung an ihrer Stirnseite eine Aufreißlasche 8a trägt. Die Wirkungs- bzw. Anwendungsweise dieser bei Tageslicht beladbaren Filmvorratsstation 1, 2, 8 ist nun folgende:

Zunächst wird gemäß Fig. 1 der Deckel 6 des Magazins nach rückwärts in die offene Stellung der Box 7 gezogen, wobei der Griffteil 7c auch in der auseinandergezogenen Stellung von Box und Deckel hinten durch den Deckel vorsteht. Dann wird die Blattfilmpackung 8 ungeöffnet in die Box 7 von oben eingelegt und die Aufreißlasche 8a nach oben um die Labyrinthrippe 7b der Box 7 gelegt und der Deckel 6 in seine geschlossene Stellung zugeschoben. Dabei ist die Aufreißlasche zwischen Rippe 7b und Nut 6a gelegt und steht ein Stück nach oben aus dem Magazin 2 vor, wie in Figur 2 gezeigt ist. Nun wird das geschlossene Magazin 2 mit der vorstehenden Aufreißlasche 8a in das Vorratsfach 1 von hinten her eingeschoben. Beim Einschieben trifft die Stirnseite des Deckels 6a auf das Wandteil 1c und wird daher gegen ein weiteres Einschieben in das Fach 1 zurückgehalten, so daß beim weiteren Schieben am Griffteil 7c die Box 7 mit der Packung 8 allein in den lichtdichten Raum 1b bis in die in Figur 3 gezeigte Anschlaglage weiterbe-

A-G 1933

wegt wird. Die Aufreißlasche 8a hatte jedoch gemäß Figur 2 eine Stellung, daß sie zwischen das Wandteil 1c und die Stirnseite des Deckels 6 beim Einschieben des Magazins 2 eingeklemmt wird. Beim Weiterschieben der Box 7 in den lichtdichten Raum 1b wird an der eingeklemmten Aufreißlasche 8a die Aufreißpackung 8 aufgerissen, so daß, wie in Figur 3 gezeigt ist, in der Gebrauchsstellung der Anordnung durch das Einklemmen der Aufreißlasche 8 und Weiterschieben der Box 7 automatisch im lichtdichten Raum 1b die Packung 8 geöffnet wird und die Filmblätter 5 in ihrer richtigen Stellung zum Entnehmen durch den Sauger 3 bereitliegen. Der Antrieb von Sauger 3 und Transportrollen 4 erfolgt bei Bedarf in bekannter Weise.

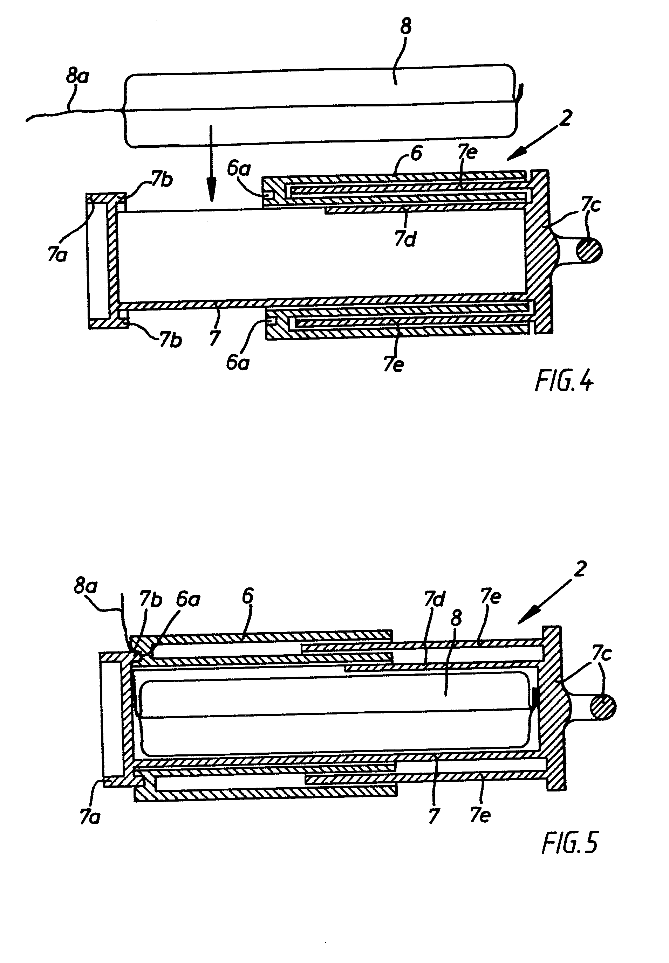

Das Magazin 2, das auch als Blattfilmkassette bezeichnet werden könnte, nach den Figuren 4 bis 6, entspricht im Prinzip dem Magazin nach den Figuren 1 bis 3. Jedoch ist bei dem Magazin 2 nach den Figuren 4 bis 6 zur Verkürzung des Griffteiles 7c die Oberseite der Box 7 zum Teil durch eine mit dem Griffteil 7c, das hier die ganze Boxrückseite überdeckt, verbundenen Abdeckteil 7d abgedeckt und nur soweit oben offen, als dies zum Einlegen der Packung 8 erforderlich ist. Etwa in dem oben nicht offenen Bereich ist die Box 7 doppelwandig mit Wandstücken 7e ausgebildet, die Labyrinthnuten und eine Führung für den ebenfalls doppelwandig ausgebildeten, nur über etwas mehr als die Öffnung in der Box 7 reichenden Deckel 6 bilden. Wie Figur 4 entnehmbar ist, sind in der geöffneten Stellung des Magazins 2 nach den Figuren 4 und 5 die Doppelwände von Box 7 und Deckel 6 ineinandergeschoben, so daß die Packung 8 von oben in

A-G 1933

die Box 7 durch Einschieben eingelegt werden kann. In der geschlossenen Magazinstellung nach Figur 5 ist der Deckel 6 teleskopartig gegenüber der Doppelwand der Box 7 ausgezogen und verschließt letztere, wobei die Wirkungsweise des Magazins 2 nach den Figuren 4 und 5 im übrigen der nach den Figuren 1 bis 3 entspricht.

Um ein unbeabsichtigtes Öffnen des Magazins 2 zu vermeiden, muß zwischen Box 7 und Deckel 6 eine beim Einschieben in das Fach 1 lösbare Verriegelung vorgesehen sein. Hierfür kann jede bekannte Kassettenöffnungsvorrichtung mit automatischer Entriegelungsvorrichtung Verwendung finden. Ein Beispiel einer derartigen Vorrichtung ist in Figur 6 gezeigt. Hierbei sind an den Magazin-Schmallängsseiten am Deckel 6 Riegelfedern 9 vorgesehen, die mit je einem Sperrteil 10 an der Box 7 in der geschlossenen Magazinstellung verrasten bzw. verrastet sind und an ihrem freien Ende Schrägflächen 9a aufweisen. Im Fach 1 ist vorzugsweise bereits in der lichtdichten Kammer 1b an entsprechender Stelle je eine Gegenschrägfläche 1e angebracht. Beim Einschieben des Magazins 2 in das Fach 1 trifft die Schrägfläche 9a auf die Schrägfläche 1e, so daß die Riegelfeder 9 vom Sperrteil 10 ausgehoben wird und damit der Deckel 6 beim Auftreffen auf die Wand 1c zurückgehalten wird, während die Box 7 weitergeschoben werden kann. Beim Wiederentnehmen des Magazins 2 aus dem Fach 1 trifft zunächst die Rippe 7b in die Nut 6a, so daß der Deckel 6 ebenfalls herausgezogen wird. Dabei reißt dann die Riegelfeder 9 von der Schrägfläche 1e ab und verrastet wieder mit dem Sperrteil 10, so daß das Magazin 2 beim endgültigen Entnehmen aus dem Fach 1 wieder

A-G 1933

0154803

verschlossen und gegen unbeabsichtigtes Öffnen gesichert ist.

In den Figuren 7 bis 9 ist ein weiteres Magazin 2 gezeigt, das beim Einsetzen in das Fach 1 zwar automatisch geöffnet wird, bei dem jedoch die Packung 8 nach dem Einlegen und Verschließen des Magazins 2 vorher von Hand aufgerissen werden muß. Hierzu ist die Oberkante der Box 7 als Schwenkarm 7f ausgebildet, der zwischen sich und dem Unterbereich einen lichtabgedichteten Spalt 7g einschließt. In der geöffneten Magazinstellung wird die Packung 8 in die Box 7 bei hochgeklapptem Schwenkarm 7f eingelegt und die Aufrißlasche 8a zwischen Unterbereich und Schwenkarm 7f in den Spaltbereich 7g eingeschoben; vgl. Fig. 7. Dann wird der Schwenkarm 7f heruntergeklappt und der Deckel 6 in seine geschlossene Stellung geschoben; vgl. Fig. 8. Schließlich wird vor dem Einsetzen des Magazins 2 in das Fach 1 von Hand durch Ziehen an der Aufrißlasche 8a (vgl. Fig. 9) die Packung 8 im Innern des Magazins 2 aufgerissen und liegt lichtdicht und gebrauchsbereit in diesem. Beim Einsetzen des Magazins in das Fach 1 wird dann wieder der Deckel 6 durch die Wand 1c zurückgehalten und das Magazin in seine in Figur 3 gezeigte Offenstellung geschoben, wobei die Blätter 5 infolge des vorherigen Aufreißens der Packung 8 ebenfalls für den Transport bereit liegen. Im übrigen sind gleichwirkende Teile in allen Figuren mit gleichen Bezugsziffern versehen.

A-G 1933

- 10 -

0154803

AGFA-GEVAERT
Aktiengesellschaft                    D-5090 Leverkusen 1

Patentabteilung

                                      eh-se

Ansprüche

1.   Lichtdichtes Blattfilmmagazin, vorzugsweise für
     Röntgenfilm, das zur Aufnahme eines in einer
     lichtdichten, aufreißbaren Umhüllung mit Aufreißlasche befindlichen Blattfilmstapels dient,
     und Entnahmevorrichtung zum Entnehmen einzelner
     Blattfilme aus dem Magazin mit einem mit einer
     lichtdichten Kammer versehenen Fach für das Magazin, wobei in der Kammer das Magazin geöffnet
     ist, dadurch gekennzeichnet, daß das Magazin (2) aus einer oben zumindest teilweise offenen Box (7) für den in der Umhüllung (8) befindlichen Filmstapel (5) und einem entgegen
     der Einschubrichtung des Magazins (2) in das
     Fach (1) von einer geschlossenen in eine geöffnete Stellung schiebbaren Deckel (6) besteht,
     daß an der Box (7) ein über den Deckel (6) in
     dessen geöffneter Stellung vorstehender Griffteil (7c) angebracht ist und daß am Deckel (6)
     gegenüber der Box (7) quer zur Einschubrichtung

A-G 1933

vorstehende Deckelteile (bei 6a) angeordnet sind, in deren Bewegungsweg in Einschubrichtung vor der lichtdichten Kammer (1b) Wandteile (1c) des Faches (1) liegen.

2. Magazin nach Anspruch 1, dadurch gekennzeichnet, daß zwischen der in Einschubrichtung liegenden Stirnseite der Box (7) und der dieser zugewandten Stirnseite des Deckels (6) Lichdichtungsmittel, vorzugsweise im geschlossenen Zustand ineinander greifende Labyrinthrippen und -nuten (7b, 6a) an beiden Teilen (7, 6) vorgesehen sind.

3. Magazin nach den Ansprüchen 1 und 2, dadurch gekennzeichnet, daß der mit der Lichtabdichtung (7b, 6a) versehene Spalt zwischen Box (7) und Deckel (6) in der geschlossenen Magazinstellung eine Durchführung und Klemmvorrichtung für die Aufreißlasche (8a) einer in die Box (7) eingelegten Packung (8, 5) bildet.

4. Magazin und Vorrichtung nach einem der Ansprüche 1 bis 3, dadurch gekennzeichnet, daß das der magazinseitigen Durchführung und Klemmvorrichtung (7b, 6a) für die Aufreißlasche (8a) zugeordnete fachseitige Wandteil (1c) zusammen mit der deckelseitigen Stirnseite (bei 6a) im in das Fach (1) eingeschobenen Zustand des Magazins (2) eine weitere Klemmvorrichtung für die aus dem Magazin (2) vorstehende Aufreißlasche (8a) bildet.

A-G 1933

5. Magazin und Vorrichtung nach einem der vorhergehenden Ansprüche, dadurch gekennzeichnet, daß in der lichtdichten Kammer (1b) und/oder an der Stirnseite der Box (7) Anschläge (7a) für die gegenüber dem Deckel (6) geöffnete Stellung der Box (7) vorgesehen sind.

6. Magazin und Vorrichtung nach Anspruch 5, dadurch gekennzeichnet, daß die Anschläge durch einen stirnseitigen Rahmen (7a) an der Box (7) und die in Einschubrichtung vordere Innenseite des Faches (1) bzw. der Kammer (1b) gebildet werden.

7. Magazin nach einem der vorhergehenden Ansprüche, dadurch gekennzeichnet, daß die Öffnung zum Einlegen des Stapels (8, 5) und der Deckel (6) hierfür nur über einen Teil der Box-Oberseite reichen und der Deckel (6) und ein die Öffnung verkleinernder Abdeckteil (7d) der Box (7) doppelwandig und labyrinth- oder teleskopartig ineinandergreifend ausgebildet sind.

8. Magazin nach einem der Ansprüche 1, 2, 5 oder 6, dadurch gekennzeichnet, daß die in Einschubrichtung weisende, boxseitige Stirnseite in einen festen Teil und einen schwenkbaren, mit ersterem im geschlossenen Zustand einen lichtdichten Schlitz (7g) bildenden Rahmenteil (7f) unterteilt ist und daß die Aufreißlasche (8a) beim Einlegen eines Stapels (8, 5)

A-G 1933

0154803

bei aufgeklapptem Rahmenteil (7f) zwischen diesen und den festen Teil durch den Schlitz (7g) nach außen führbar ist.

9.  Magazin nach einem der vorhergehenden Ansprüche, dadurch gekennzeichnet, daß der Deckel (6) die Box (7) rohrförmig übergreift.

10. Magazin und Vorrichtung nach einem der vorhergehenden Ansprüche, dadurch gekennzeichnet, daß zwischen Deckel (6) und Box (7) an Magazin-Schmallängsseiten eine Verriegelungsvorrichtung (9, 10) und an zugeordneten Fach-Seitenwänden eine Entriegelungsvorrichtung (1e) für die Verriegelungsvorrichtung (9, 10) angeordnet sind.

11. Magazin und Vorrichtung nach Anspruch 10, dadurch gekennzeichnet, daß die Verriegelungsvorrichtung aus mindestens einer am Deckel (6) vorstehenden Riegelfeder (9) mit einer Schrägfläche (9a) und mindestens einem an der Box vorstehenden Sperrteil (10) gebildet wird und daß die Entriegelungsvorrichtung durch mindestens eine im Fach (1) angebrachte, der Schrägfläche (9a) zugeordnete weitere Schrägfläche (1e) besteht, die so im Bewegungsweg der Riegelfeder (9, 9a) angeordnet ist, daß sie diese vom Sperrteil (10) abhebt, bevor der Deckel (6) auf das Wandteil (1c) trifft.

Hierzu 4 Blatt Zeichnungen

A-G 1933

FIG.1

FIG.2

FIG.3

FIG.4

FIG.5

FIG. 6

0154803
414

FIG. 7

FIG. 8

FIG. 9